# EUROPEAN PATENT APPLICATION

(11) **EP 2 320 173 A2**
(43) Date of publication of application: **11.05.2011**
(21) Application number: 10446503.4
(22) Date of filing: 05.11.2010
(51) Int. Cl.: F25D 3/08

(54) **Apparatus and supporting base**

(30) Priority: 05.11.2009 SE 0950828
(71) Applicant: Kassman, Peter, 891 78 Bonässund (SE)
(72) Inventor: Kassman, Peter, 891 78 Bonässund (SE)
(74) Representative: Nikolopoulou, Sofia

(57) **Abstract**

The present invention relates to an apparatus 1 for the temporary storage and display of cold or hot goods in a sales area. The apparatus 1 comprises structural components 2.1-2.5 incorporating an insulating material 3 which together form and shape a storage space 4 for the goods; a cold or hot body 5 for temporarily cooling or heating the storage space and the goods; and a cover 6 that can be closed and opened, in order to retain the cold or heat and to provide access to the goods.

The invention also relates to a supporting base 9 that is to be used together with the apparatus 1.

## Description

### Branch of Technology

The present invention relates to an apparatus for the storage of cold or hot convenience goods per the preamble to Claim 1, and to a supporting base per the preamble to Claim 16.

### Background

There are prior-known cooling apparatuses of the refrigerator, refrigerated display case, and the like, type for cold, refrigerated, goods or convenience goods, that are to be sold at stores, kiosks, gasoline stations or other locations that provide a sales area, an access area, a display area, a selling space, or the like. There are also prior-known warming apparatuses of the warming cabinet type for hot, heated, convenience goods that are to be sold at similar locations.

By the word "good", a convenience good or convenience goods, is to be understood perishable goods, non-durable goods, goods that are meant to be consumed within a limited period of time. In this instance, primarily foods are meant, but other types of goods, convenience goods, that need to be refrigerated or warmed - flowers, for example - can also be relevant.

These warming or cooling, as the case may be, apparatuses are usually large, can be used only for one purpose or the other - warming or refrigerating - and require access to an electric-power outlet, as a result of which they are placed in a very limited number of rather secluded areas in the spaces and rooms used as sales areas.

### Detailed Description and Specification of the Invention

One object of the present invention is provide an apparatus that makes it possible to temporarily store hot or cold goods, at one's option, at a location of one's choice within a sales area.

This object is attained by means of an apparatus for the storage of cold or hot goods that has the distinctive technical features specified in the characterizing clauses of Claim 1, and a supporting base that has the distinctive technical features specified in Claim 16.

### Brief Description of the Drawings

**Fig. 1** shows an apparatus of the invention.
**Fig. 2a** shows an apparatus of the invention in its unassembled state and without a cover.
**Fig. 2b** shows section X-X through the apparatus in Fig. 2a.
**Fig. 3** shows where parts [of the apparatus] of the invention are located.
**Fig. 4** shows where parts [of the apparatus] of the invention are located.
**Fig. 5** shows an apparatus of the invention used together with a shopping cart.
**Fig. 6** shows an apparatus and a supporting base of the invention.

### Detailed Description of Embodiment Examples

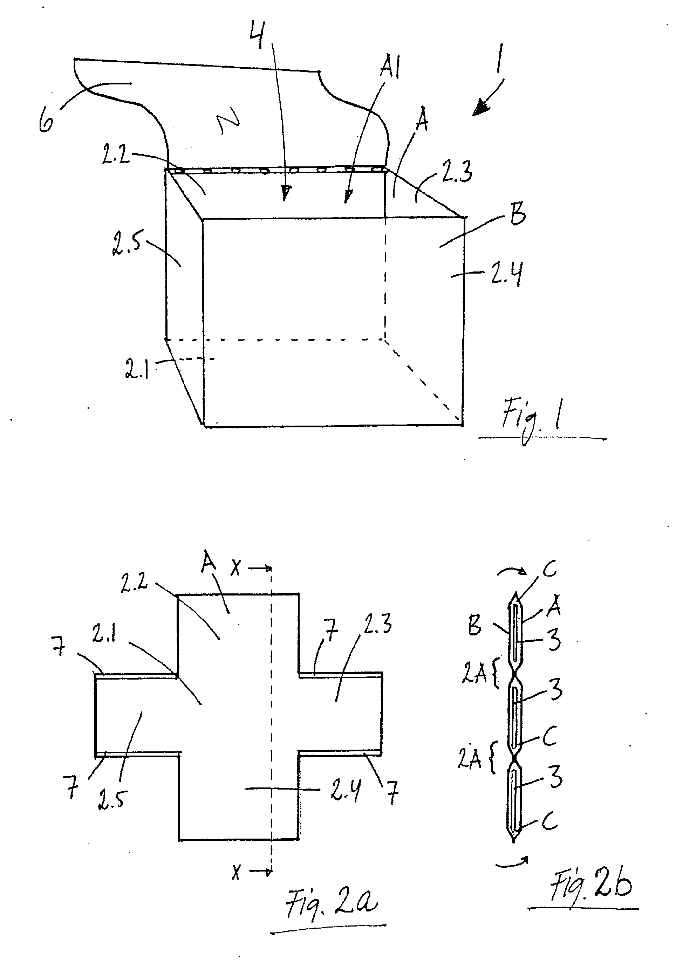

An apparatus 1 of the present invention, for the temporary storage and display of cold or hot goods, convenience goods, in a sales area, comprises structural components 2.1-2.5, which in turn comprises an insulating material 3. The structural components together form and shape a storage space 4 for the convenience goods. The apparatus 1 also comprises a cold or warm body 5 for the temporary cooling or heating of the storage space and the convenience goods, and a cover 6 that can be closed and opened for retaining the cold or heat and for providing access to the convenience goods. See Figs. 1, 2a and 2b.

### The Structural Components

The apparatus's structural components 2.1-2.5 in substance comprise a plate, flat components, so that the apparatus, when it is to be used, has the shape of a box with a bottom and erect sides. The apparatus 1 comprises a bottom section 2.1 and four side sections 2.2-2.5 which are joined to one another and which together form and shape the storage space 4. See Fig. 2a.

The bottom section 2.1 is joined to the individual side sections 2-2.5 via a flexible section 2A which makes it possible for the side sections 2.2-2.5 to be able to be bent up around the bottom section 2.1 so that the storage space 4 is enclosed by the bottom section 2.1 and the side sections 2.2-2.5. The flexible section 2A also makes it possible for the apparatus 1 to be able to be folded together. The bottom section 2.1 is permanently joined to the side sections 2.2-2.5 at the individual lower edges of the side sections 2.2-2.5, the edge of each side section 2.2-2.5 that faces the bottom section 2.1. See Fig. 2b.

### The Construction of the Structural Components

The individual structural components 2.1-2.5 comprise a first side A, which forms part of the inside A1 of the apparatus, and a second side B, which forms part of the outside B1 of the apparatus. The first side A and the second side B are joined to one another mainly along the boundary sides of the individual structural components, so that a space C is formed between each structural component's first side A and second side B. The first side A and the second side B are joined by heating and pressing, applying an adhesive material, or in another suitable manner.

All the first sides A of the structural components are made all in one piece, of a single piece of material. All the second sides B of the structural components are made all in one piece, of a single piece of material. The insulating material 3 is placed in the individual spaces C, in all the structural components 2.1-2.5, or in just some of them. The insulating material is of the technical insulation type.

The first side A and the second side B of the structural components, i.e., the inside A1 and outside B1 of the apparatus, comprise a flexible polymer material. The flexible polymer material is in the form of a sheet, one for each side. The flexible polymer material can be a composite plastic, hygienic plastic and/or PVC.

In the area between the bottom section 2.1 and each wall section 2.2-2.5, where the first side A and the second side B are joined to one another, is also formed the flexible section 2A. The flexible section 2A thus comprises a part of the first side A and of the second side B and will be flexible because the material of the sides is a flexible polymer material.

### Assembly Mechanism

The apparatus 1 comprises an assembly mechanism 7 which detachably joins the individual structural components 2.2-2.5, a side section, to an adjoining structural component, a side section.

The assembly mechamism 7 is placed along the sides - the essentially vertical sides when the apparatus 1 has been set up and is ready to use - of the individual structural components 2.2-2.5, i.e., of a side section, that are to be joined to an adjacent structural component, i.e., a side section. See Fig. 2a. The assembly mechanism 7 comprises Velcro™ tape, a fabric hook and loop fastener. Velcro™ tape creates a relatively tight joint beween the side sections 2.2-2.5, i.e., one that will retain the cold or heat.

### The Body

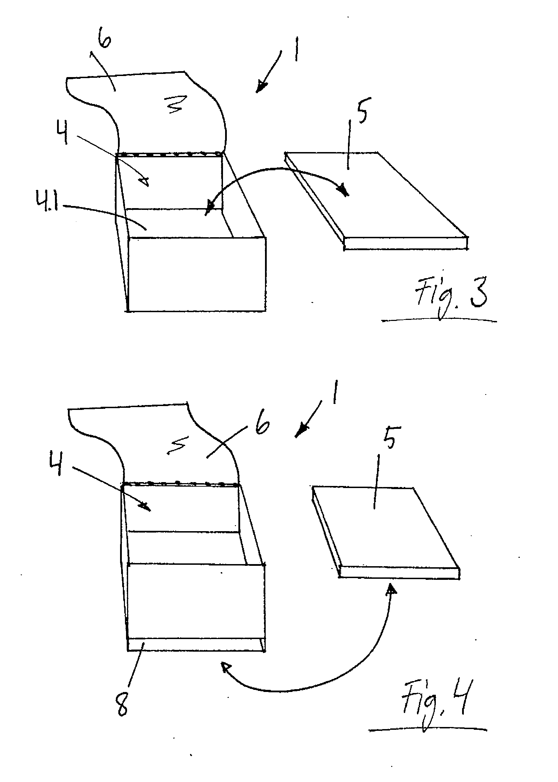

The body 5 of the apparatus, the cold or hot body 5, can consist of a stand-alone detachable unit. The body 5 is placed on the bottom 4.1 of the storage space, and its size is equal to the width and length of the storage space, and its height encroaches to a minimum on the storage space 4 without compromising the body's ability to cool or heat. See Fig. 3.

The body 5 can also be placed in a cavity 8 in any of the structural components 2.1-2.5. At least one structural component comprises a cavity 8 for storage of the cold or hot body 5. A bottom section 2.1 of the apparatus 1 comprises a cavity 8 for storage of the cold or hot body 5. See Fig. 4.

In order for the body 5 to be able to be cooled or heated, it is designed so that it contains a fluid that can be cooled or heated. The fluid can be cooled or heated before it is placed in the body 5, or else it can be cooled or heated when it has been placed in the body 5.
It is expedient for the fluid to comprise water.

Changing the use of an apparatus 1 of the invention from keeping cold to keeping warm or vice-versa can be done instantly. It is easy to cool or heat the body 5, and if the apparatus 1 is first used for cold storage, it can be changed to warm storage in a second by just removing the cold body and replacing it with a hot one. Optionally, the body 5 can be the same one and just be emptied and refilled with a cold or hot fluid depending on the desired temperature in the storage space 4.

This design with a cold or hot body 5 is highly energy-saving, because an apparatus of this kind for temporary cooling or warming does not have to be connected to any energy source while it is displaying, but still ensures a good temperature for the goods.

### The Cover

The cover, 6, which can be opened and closed, is detachably placed on the upper end of the apparatus, above the storage area 4. A fastening device 6A detachably joins the cover 6 to the apparatus 1, to a structural component 2.2-2.5. The fastening device 6A comprises snap buttons. See all the drawings.

The cover 6 is translucent, transparent. The cover 6 is made of a flexible plastic material. Its flexibility makes it possible to gently open the cover 6, lift it and draw it aside so that the goods become accessible. It is as easy and smooth-going a task to close it, and closing it is almost noiseless, also owing to its flexibility. Owing to the cover's 6 flexibility, it at most requires a space around the apparatus equal to the cover's own size, and in most cases somewhat smaller, inasmuch as the cover will bend when it is lifted from the top end of the apparatus. PVC is a suitable material.

Owing to the cover's 6 detachability, it can be quickly and easily unfastened and cleaned. A detachable cover 6 and a cover 6 that can be easily opened makes it possible to temporarily display goods that are able to manage cold or heat at their lower part and room temperature at their upper part.

### Use of the Apparatus

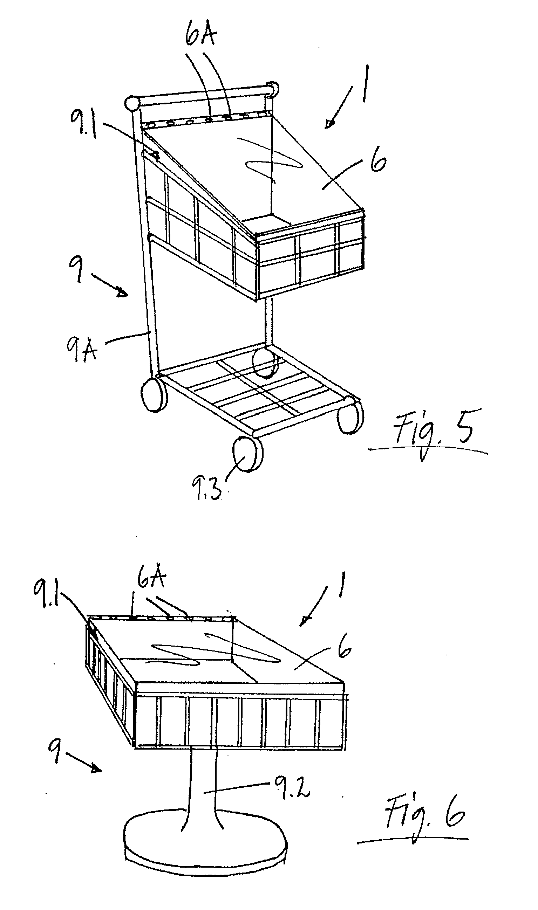

An apparatus 1 of the invention is expediently used together with a supporting base 9. A supporting base 9 places the apparatus 1 at a conveniently reachable height. The apparatus's external shape, the shape of the apparatus's outside B1, is tailored to being able to be placed in, and to fit in terms of shape against the inside of, a seating area 9.1 on the supporting base 9, in order to enable safe and stable use of the apparatus 1 together with the supporting base 9. It is expedient to tailor the apparatus's 1 shape to a supporting base 9 that is a shopping cart 9A. See Fig. 5.

It is expedient to use an apparatus 1 of the invention as a selling tool. By being able to switch between different temperatures in the storage space, one is provided a unique opportunity to offer a consumer the right good (product) in the right environment, in a controlled environment at the right temperature. It is possible to set out and display cold drinks / hot drinks, hot cinnamon buns / freshly baked Lenten buns, hot baguettes / cold filled baguettes, etc.

The apparatus 1 can be dismantled and is collapsible, owing to, among other things, the flexible section 2A, the fastening devices 6A and assembly mechanisms 7, and that means that the apparatus can be stored as a relatively flat collapsible package when it is not being used, and, when a temporary storage space is needed for goods, it can be pulled out, unfolded and assembled together. The body 5 is cooled or heated and is placed in the apparatus 1, after which cold or hot goods can be placed in the storage space 4 and be kept cold or hot for a period of time, a temporary-display period. It is easy and takes a short time to take the apparatus 1 out and put it into a totally usable state.

Because the apparatus 1 is not operated by electricity, it can be placed anywhere one wishes in a sales area, both indoors and outdoors, and the seller can still offer cold or hot goods. Also, both cold and hot goods can be offered in the same apparatus, depending on what is being sold at the time.

### Supporting Base

In order to place the apparatus at a conveniently reachable height, the invention also relates to a supporting base 9 designed to be used together with an apparatus 1 of the invention. The supporting base 9 comprises a seating area 9.1 whose shape is tailored to be able to receive and fit, in terms of shape, against the outside B1 of the apparatus. It is expedient for the supporting base to comprise some kind of leg 9.2, one or more, which is to be placed on a foundation, a floor, for example. The supporting base 9 can also comprise wheels 9.3 that make it easy to push the apparatus 1 to the desired location and also back to a refilling area, or for storage. See Fig. 6.

The present description of an apparatus of the invention and of various detailed designs shall not be viewed as a limitation of the invention but shall be used freely to interpret the invention according to the inventive conception. Detailed structural designs can be used and combined freely within the inventive conception as long as they result in the desired functions.

## Claims

1. An apparatus (1) for temporary storage and display of cold or hot goods in a sales area, **characterized in that** the apparatus comprises structural components (2.1-2.5) comprising an insulating material (3) that together form and shape a storage space (4) for the convenience goods; a cold or hot body (5) for temporary cooling or heating of the storage space and the convenience goods; and a cover (6) that can be closed and opened for retaining the cold or heat and providing access to the goods.

2. An apparatus (1) as claimed in Claim 1, wherein the structural components (2.1-2.5) comprise a bottom section (2.1) and four side sections (2.2-2.5) that are joined to one another and together form and shape the storage space (4).

3. An apparatus (1) as claimed in Claim 2, wherein the bottom section (2.1) is joined to the individual side sections (2.2-2.5) via a flexible section (2A).

4. An apparatus (1) as claimed in any of Claims 1 to 3, wherein the individual structural components (2.1-2.5) comprise a first side (A) and a second side (B), and wherein the first side (A) and the second side (B) are joined to one another mainly along the boundary sides of the individual structural components, so that a space (C) is formed between the first and second side (A, B) of the individual structural components (2.1-2.5).

5. An apparatus (1) as claimed in Claim 4, wherein the first sides (A) of all the structural components are made all in one piece.

6. An apparatus (1) as claimed in Claims 4 or. 5, wherein the second sides (B) of all the structural components are made all in one piece.

7. An apparatus (1) as claimed in any of Claims 1 to 6, comprising an assembly mechanism (7) which detachably joins the individual structural components (2.2-2.5) to adjoining structural components.

8. An apparatus (1) as claimed in Claim 7, wherein the assembly mechanism (7) comprises Velcro™ tape.

9. An apparatus (1) as claimed in any of Claims 1-8, wherein the cold or hot body (5) consists of a stand-alone, detachable unit.

10. An apparatus (1) as claimed in Claim 9, wherein the body (5) is placed on the bottom (4.1) of the storage space.

11. An apparatus (1) as claimed in Claim 9, wherein at least one structural component (2.1-2.5) comprises a cavity (8) for storing the cold or hot body (5).

12. An apparatus (1) as claimed in any of Claims 1 to 16, wherein the body (5), when the apparatus is being used, contains a cold or hot fluid.

13. An apparatus (1) as claimed in any of Claims 1 to 12, wherein the cover (6) that can be closed and opened is detachably placed on the top end of the apparatus.

14. An apparatus (1) as claimed in any of Claims 1 to 13, wherein the apparatus is intended to be used together with a supporting base (9).

15. An apparatus (1) as claimed in Claim 14, wherein the supporting base (9) is a shopping cart (9A).

16. A supporting base (9) intended to be used together with an apparatus (1) as claimed in Claim 1, wherein the supporting base (9) comprises a seating area (9.1) whose shape is tailored to be able to receive, and to fit in terms of shape against, the outside (B1) of the apparatus.
